# EUROPEAN PATENT APPLICATION

(11) **EP 1 935 559 A2**
(43) Date of publication of application: **25.06.2008**
(21) Application number: 07123064.3
(22) Date of filing: 12.12.2007
(51) Int. Cl.: B23Q 3/155, B23Q 3/157

(54) **Machining center with endless chain tool magazine**

(30) Priority: 19.12.2006 JP 2006340637
(71) Applicant: Nisshinbo Industries, Inc., Ningyo-cho Chuo-ku Tokyo 103-8650 (JP)
(72) Inventor: Ishikawa, Akihiko Nisshinbo Industries, Inc,, Okazaki-city Aichi 444-8560 (JP); Fujitani, Takuji Nisshinbo Industries, Inc,, Okazaki-city Aichi 444-8560 (JP)
(74) Representative: Jannig, Peter

(57) **Abstract**

A machining center includes a tool magazine (200) having an endless chain (220) to hold multiple tool pockets (221), a spindle (30) to which a tool that performs a machining operation on a workpiece (W) may be detachably attached, and an automatic tool changer (70) to change the tool disposed between the tool pockets and the spindle. A portion of the tool magazine disposed opposite a machine frame of the machining center or a machine cover of the machining center is disposed adjacent to a side surface (100a) and a bottom surface (100b) of the machine frame or the machine cover.

## Description

### CROSS-REFERENCE TO RELATED APPLICATIONS

The present specification claims priority from Japanese Patent Application No. 2006-340637, filed on December 19, 2006 in the Japan Patent Office, the entire contents of which are hereby incorporated by reference herein.

### BACKGROUND

### Field of the Invention

The present invention relates to a machine tool such as a machining center, and more particularly, to a machining center equipped with a tool magazine for automatic tool exchange.

### Description of the Background Art

A machining center is equipped with a tool magazine containing a variety of tools to enable a wide variety of machining operations to be carried out with a single machine. A tool stored in the tool magazine and a tool mounted on a spindle are exchanged by an automatic tool changer controlled by a controller to enable a wide variety of machining operations to be carried out.

Conventionally, three main types of automatic tool changing methods as described below have been used.

In a first method, a rotating disk is disposed at top and side portions of a machining center, tools are stored in the disk, and the disk is rotated to move the tools to a predetermined position, after which a required tool is transported to a spindle of a cutting machine by tool transport means such as a manipulator.

In a second method, tools are arrayed in a matrix shape and stored, and the required tool is transported to the position of the spindle of the cutting machine by tool transport means capable of moving along two perpendicular axes.

In a third method, tools are stored in a plurality of tool pockets arrayed in the shape of a chain, the chain circulated and the required tool moved to a predetermined position, and the required tool then transported by tool transport means to the spindle of the cutting machine.

In general, with respect to machining centers, there is a natural desire to increase the number of stored tools in order to facilitate carrying out a greater variety of machining operations and machining a larger number of workpieces simultaneously.

In an effort to satisfy this demand, an invention described in JP-S61-44545-A proposes a tool storage and supply device that arranges a plurality of tool pockets in a single line in a tool rack, with the tool racks disposed inside a plurality of frames. Since the tool pockets that hold the tools are arrayed in a matrix shape, such an arrangement makes it possible to store a very large number of tools.

Similarly, an invention described in JP-2006-150468-A proposes a machining device having an automatic tool changer and a tool magazine of simple structure that stores the tools in a fan-shaped pallet.

Further, an invention described in JP-H10-315077-A introduces a horizontal type machining center that places the tool magazine around a top of the machining center in order to save space.

However, there are problems with each of the three inventions described above.

For example, although the invention described in JP-S61-44545-A does enable the number of tools stored to be increased to a required number, the tool storage and supply device is separate from the machining center, necessitating space to install the tool storage and supply device. Consequently, where space to install the machining center is limited, so too is the number of tools that can be stored.

Likewise, the invention described in JP-2006-150468-A aims at simplifying the tool magazine and reducing the space required for the cutting machine. An opening is provided in the cutting machine's plate-shaped machine frame, and the fan-shaped tool magazine is contained within that opening in an effort to save space. But such a configuration severely limits the number of tools that can be stored in the magazine, making it difficult to cope with the variety of machining operations ordinarily performed by the machining center.

Further, the invention described in JP-H10-315077-A also aims at saving space by positioning the tool magazine around the top of the machining center. However, in the case of a small machining center this configuration limits the number of tools that can be stored in the tool magazine. If a large number of tools is then stored in the tool magazine to achieve a variety of different types of machining the size of the tool magazine increases, making it difficult to achieve savings in the space required for the machining center. Moreover, such a configuration requires that replacement of the tools in the tool magazine by an operator take place above head level, which is neither easy nor safe.

### SUMMARY

The present invention provides a machining center capable of containing a large number of tools without the need for increased installation space, and further, provides a machining center that enables confirmation of whether or not an operator has mounted tools correctly in tool pockets of a tool magazine of the machining center to be carried out simply and easily.

In one embodiment, a machining center according to the present invention provides a tool magazine having an endless chain to hold a plurality of tool pockets, a spindle to which a tool that performs a machining operation on a workpiece may be detachably attached, and an automatic tool changer to change the tool, disposed between the plurality of tool pockets and the spindle. That portion of the tool magazine which is disposed opposite a machine frame of the machining center or a machine cover of the machining center is disposed adjacent to a side surface and a bottom surface of the machine frame or the machine cover.

In another embodiment, the machining center has at least two drive components that drive the endless chain in a circulating manner. Preferably, the drive components comprise two sprockets spaced a constant distance apart and the automatic tool changer changes the tool at a position between the two sprockets.

In another embodiment, a lateral side surface of the machining center's machine frame has an opening formed therein for mounting a tool in the tool pocket, a cover mounted on the frame so as to cover the opening when closed and enable access to the opening when open, an engaging part mounted on the cover that engages an engaged part formed on a tool mounted in a tool pocket when the cover is closed, and a sensor to detect closing of the cover of the opening in the lateral side surface of the machine frame. The sensor detects proper closing of the cover by detecting engagement of the engaging part on the cover with the engaged part on the tool.

According to the present invention, no part of the tool magazine protrudes beyond the outside surface of the machining center, thereby enabling a large number of tools to be mounted in the tool magazine without increasing the installation space of the machining center.

In addition, preferably, the endless chain of the tool magazine is disposed adjacent to an inner wall surface and/or an outer wall surface of the machine frame or the machine cover over at least half its length, thereby enabling the number of tools that the tool magazine can store to be maximized without the need for more space.

Moreover, by using at least two drive components to drive the endless chain in a circulating manner, the tool magazine can be circulated smoothly. Having the automatic tool changer change the tool at a position between the two sprockets ensures that the tool change position remains constant even when the endless chain slackens.

Additionally, when an operator replaces the tools in the tool pockets of the tool magazine, the following procedure is used: First, the cover over the opening provided in the machine frame or the machine cover is opened. Then, the tool mounted in the tool pocket is removed and a new tool mounted. There is an engaged part located at the same position on every tool, and there is an engaging part provided on the cover that closes the opening. The engaging part engaging the engaged part enables the cover to close the opening, and the closing of the cover can be detected by the sensor. Therefore, the present invention makes it possible to confirm easily that the tool has been mounted properly using the simple structure described above.

Further, where the tool magazine is disposed so as to be contained within the machine frame of the machining center, the need for additional safety components such as a safety cover for the tool magazine can be minimized.

Other features and advantages of the present invention will be apparent from the following description when taken in conjunction with the accompanying drawings, in which like reference characters designate similar or identical parts throughout the several views thereof.

### BRIEF DESCRIPTION OF THE DRAWINGS

FIG. 1 is a drawing showing a front view of a machining center mounting a tool magazine according to the present invention;
FIG. 2 is a drawing showing a side view of the machining center mounting the tool magazine according to the present invention;
FIG. 3 is a block drawing showing a detail view of a state in which tools are stored in the tool magazine;
FIG. 4 is a drawing showing a detail view of a corner of the tool magazine;
FIG. 5 is a drawing showing a front detail view of a driving part of the tool magazine;
FIG. 6 is a drawing showing a side detail view of the driving part of the tool magazine;
FIGS. 7A and 7B are drawings showing plan and side views, respectively, of a tool mount cover and opening; and
FIGS. 8A-8D are drawings showing examples of various layouts of the tool magazine and machine frame.

### DETAILED DESCRIPTION

A detailed description will now be given of illustrative embodiments of the present invention, with reference to the accompanying drawings. In so doing, although specific terminology is employed for the sake of clarity, the present disclosure is not to be limited to the specific terminology so selected, and it is to be understood that each specific element includes all technical equivalents that operate in a similar manner and achieve a similar result.

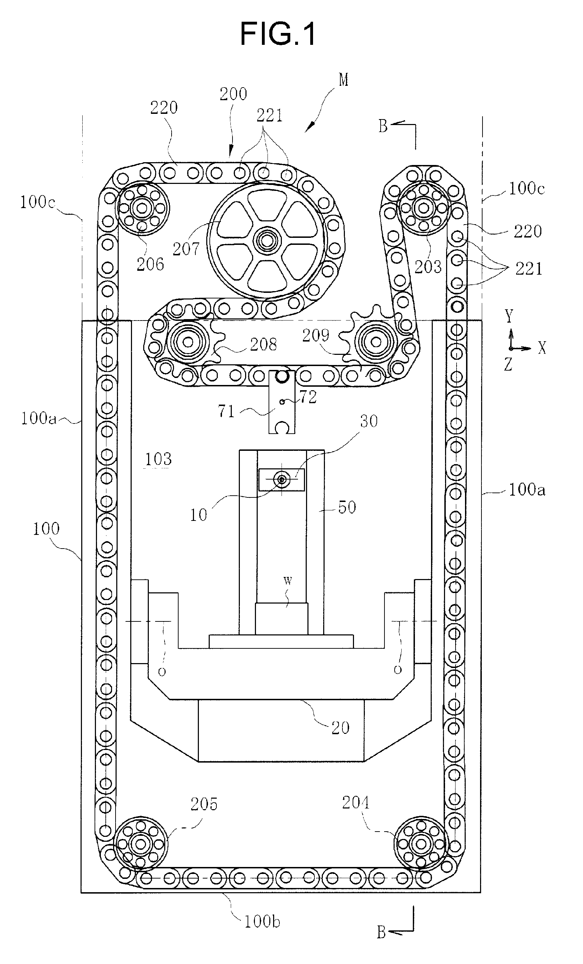

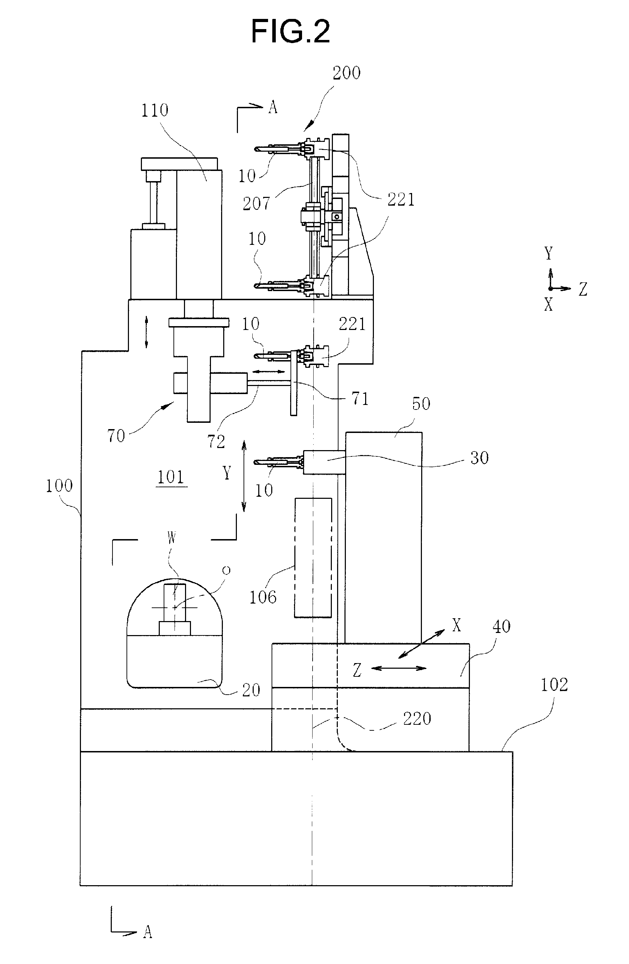

Referring now to the drawings, in particular FIGS. 1 and 2, first, a description is given of embodiments of the present invention using an example of a configuration in which a tool magazine is disposed inside of an outer side surface of a machining center or an extension surface thereof at a side portion of the machining center.

FIGS. 1 and 2 show schematically the machining center according to one embodiment of the present invention, in which FIG. 1 shows a view along a line A-A shown in FIG. 2 and FIG. 2 shows a view along a line B-B shown in FIG. 1.

A machining center M according to the present invention, as shown in FIGS. 1 and 2, comprises a jig 20, a spindle 30, an automatic tool changer 70, and a tool magazine 200 mounted on a machine frame 100.

As shown in FIG. 2, the machine frame 100 of the machining center M, when viewed from the side, is substantially an L-shaped form. The jig 20, the automatic tool changer 70, and the tool magazine 200 are mounted on a main pillar 101 of the machine frame 100 that corresponds to the vertical portion of the L. A drive motor and a NC (numerical control) positioning unit that determines the position of the X, Y, and Z axes of the spindle 30 are disposed on a base 102 that corresponds to the horizontal portion of the L leg of the machine frame 100. Further, auxiliary equipment, such as cutting dust removers, are either contained in or connected to the machining center M.

The jig 20 and the automatic tool changer (ATC) 70 are disposed within a space 103 in a front opening of the machine frame 100. The machine frame 100 may be constructed of welded steel plate or cast, with an interior space in which the tool magazine 200 is strung along an inner wall surface of the machine frame 100, such that the tool magazine 200 is exposed at the top of the machining center M from an opening in the top of the machine frame 100.

The jig 20 holds a workpiece W, and, as shown in FIG. 1, is supported at both ends thereof by the main pillar 101 of the machine frame 100. The jig 20 is configured to be rotatable about an axis O in a direction shown by an arrow in the drawing by an actuator, not shown. The workpiece W is fixed in place at a positioning unit of the jig 20 by the operator using a clamp or the like.

Where there is no need to rotate the workpiece during machining, the jig is a type that is fixed on the base. In such case, the machine frame has no main pillar 101, and instead a splash guard or other machine cover corresponding to the main pillar 101 is provided.

The spindle 30, in the machining center M of the present invention, is an apparatus that mounts, and rotatably drives, a drill, endmill, or other such tool 10 that machines a workpiece W. The spindle 30 is provided with tool attachment and removal, tool rotatable drive, and tool rotation speed adjustment capabilities with which any ordinary machining center is normally equipped, and is controlled by a controller, not shown, provided on the machining center M, all of which can be implemented by using known technology.

Spindle drivers 40, 50 are controlled by the controller of the machining center M of the present invention, and move the spindle 30 to the required position on the workpiece W.

As shown in FIGS. 1 and 2, the spindle driver 40, which is an XZ slide unit configured as a two-stage stacked type consisting of an X axis slide unit and a Z axis slide unit, is mounted on the base 102 of the machine frame 100, with the spindle driver 50, which is a columnar Y axis slide unit, mounted on top of the XZ slide unit 40. On the XZ slide unit 40 and the Y axis slide unit 50 are provided a drive motor to drive in the direction of each of the X, Y, and Z axes and an NC positioning unit. Such a construction enables the spindle 30 to move in the directions of the X, Y, and Z axes, bring the tool 10 near the workpiece W, and conduct machining.

Known art can be used for the structure to move the spindle 30, as well as the NC positioning unit and the motor and so forth.

The automatic tool changer 70 is an apparatus that changes the tool 10 attached to the spindle 30 of the machining center M of the present invention. The automatic tool changer 70 is driven in accordance with a program by the controller of the machining center M. As shown in FIG. 2, an auxiliary frame 110 is mounted on the top of the machine frame 100, on which is disposed, so as to be movable in a longitudinal direction, the automatic tool changer 70. An ATC arm 71 is provided on the automatic tool changer 70. The ATC arm 71 has two ends, disposed so as to be selectably disposable opposite the tool 10 in the spindle 30 and one of the tools 10 in the tool magazine 200. By extending and retracting a shaft 72, the arm 71 can approach and withdraw from the spindle 30 and the tool magazine 200. By rotating the shaft 72, the ATC arm 71 can be rotated. Each of the two ends of the ATC arm 71 has a chuck capable of grasping a tool 10.

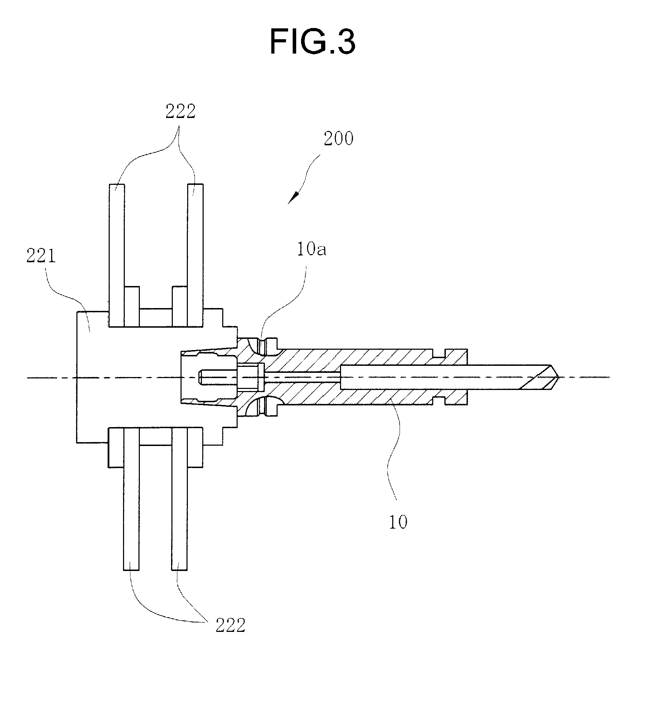

FIG. 1 shows an overall view of the tool magazine 200 and FIG. 3 shows a partial view of the tool magazine 200, showing a single tool pocket 221. As shown in these drawings, the tool magazine 200 connects a plurality of tool pocket 221 endlessly in a chain. Specifically, the tool pocket 221 is formed inside a roller pin that connects links 222 in an endless chain 220. The tool 10 is detachably attached to the tool pocket 221. Therefore, a number of tool pockets 221 equal to the number of links in the endless chain 220 can be provided in the tool magazine 200.

In the present invention, as shown in FIG. 1, approximately 80 percent of the height of the endless chain 220 is contained within the machine frame 100, with the remaining approximately 20 percent exposed above the machine frame 100. Although not shown, a tool magazine cover may be provided on the top of the machine frame 100, so that the exposed portion of the tool magazine 200 is covered by the tool magazine cover. In such case, the tool magazine 200 is deployed along both the machine frame 100 and the tool magazine cover. In addition, the tool magazine 200 is disposed adjacent to an inner wall surface of the machine frame 100 over at least half its length. The endless chain 220 is guided by corner rollers 203, 204, 205, and 206 at four corners, and is provided with a large idler roller 207 at the top.

The endless chain 220 snakes widely below the idler roller 207 to form a horizontal portion, and is provided with drive sprockets 208, 209 at both ends of the horizontal portion. The endless chain 220 is deployed as described above, such that, as the idler roller 207 slides to the right in FIG. 1, slack in the endless chain 220 can be adjusted.

The lateral side surfaces of the machining center M are such that the endless chain 220 does not protrude at all beyond the outer boundaries of the machining center M. From above the machine frame 100 the endless chain 220 lies exposed at the top of the machine frame 100, but does not protrude at all beyond the lateral outside surface 100a and the bottom surface 100b of the machine frame 100. Moreover, even at the portion of the endless chain 220 that is exposed at the top of the machine frame 100, the endless chain 220 does not protrude beyond hypothetical planes 100c representing extensions of the lateral side surfaces 100a. Therefore, the tool magazine 200 does not at all require expanding the installation space for the machining center M.

When a tool magazine 200 cover is provided at the top of the machining center M, it is preferable that an inner surface of the cover be flush with the hypothetical extended plane 100c, and further, cover the vicinity of the top surface of the tool magazine 200.

Further, inside the machine frame 100, the endless chain 220 lies adjacent to the outer lateral side surfaces 100a and the bottom surface 100b of the machine frame 100, and deployed so that the length of the endless chain 220 can be maximized.

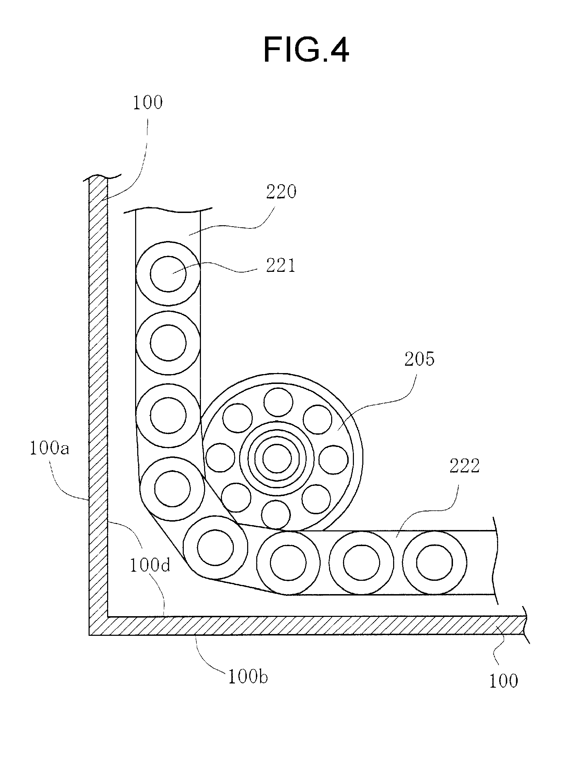

FIG. 4 shows an expanded view of the corner roller 205 as an example of a corner support. The corner roller 205 is a steel disc-like component rotatable about a central bearing. The disc gets between the links 222 of the endless chain 220 to prevent the endless chain 220 from slipping back and forth in the machining center M. In addition, the tool magazine 200 is disposed adjacent to the inner wall surface 100d of the machine frame 100. Although not shown, the corner roller 204 has the same structure.

In the tool magazine 200 of the present embodiment, the endless chain 220 is deployed along the inner wall surface 100d of the machine frame 100 over at least half the length of the endless chain 220, thus maximizing the length of the endless chain 220 and enabling the maximum number of tools to be mounted. In the present embodiment of the present invention, 116 tool pockets 221 and the same number of tools 10 can be set in the tool magazine 200. However, it should be noted that the number of tools that can be stored in the tool magazine 200 is determined as appropriate by the dimensions of the machine frame 100 of the machining center M and the interval between tool pockets 221 (link length), and is not limited to those of the present embodiment.

FIG. 3 shows a tool 10 stored in the tool pocket 221. The tool pocket 221 is comprised of roller pins that link the links 222 of the endless chain 220. The tool pocket 221 shown in FIG. 3 is known art, in which a hollow, columnar receptor insert made of synthetic resin is fitted into an interior of a hollow steel pipe. A socket part of the tool 10 engages the receptor, enabling the tool 10 to be held. An engaging part 10a is provided on the tool 10, and this engaging part 10a is formed at the same location on all the tools 10 no matter what kind of tool it is.

To the tool pockets 221 are given marks in the form of continuous numbering or the like, provided in order to identify individual tool pockets 221, and a variety of tools 10 are mounted in the tool pockets 221. The tool to be mounted and the position of the tool pocket are determined by the type of machining to be performed on the workpiece and the process order, and are specified by the controller of the machining center M.

Changing of a tool on the spindle 30 is carried out as follows:
(1) The ATC unit 70 descends to a lowered position and the shaft 72 extends, and the tool magazine 200 sends the tool to be used next to a tool change position.
(2) The ATC unit 70 ascends and the chuck on the top side of the ATC arm 71 grabs the tool 10 in the tool pocket. At this time, the other chuck remains empty.
(3) Next, the length of the shaft 72 of the ATC arm 71 is reduced and the tool 10 is removed from the tool pocket 221.
(4) The ATC unit descends.
(5) The shaft 72 is extended at a lower end of the ATC unit and stands by.
(6) The X/Z axes are moved to the position of the ATC, the Y axis is raised (the spindle ascends), and the tool mounted on the spindle enters the chuck on the bottom side of the ATC arm.
(7) The tool is grasped by the bottom chuck of the ATC arm, the shaft 72 is retracted, and the tool is plucked from the spindle.
(8) After the ATC arm is rotated 180 degrees, the shaft 72 is extended and the tool 10 grasped by the bottom chuck is inserted in the spindle.
(9) After the tool is clamped by the spindle, the Y axis is lowered and the tool is plucked from the bottom chuck of the ATC, thus emptying the bottom chuck.
(10) After the shaft 72 is retracted, the ATC unit is raised.
(11) The shaft 72 is extended and the unneeded tool is attached to the tool pocket 221.
(12) The ATC unit is lowered.

By operations (1) through (12) described above, the changing of the tool is completed.

A description is now given of the tool magazine drive unit.

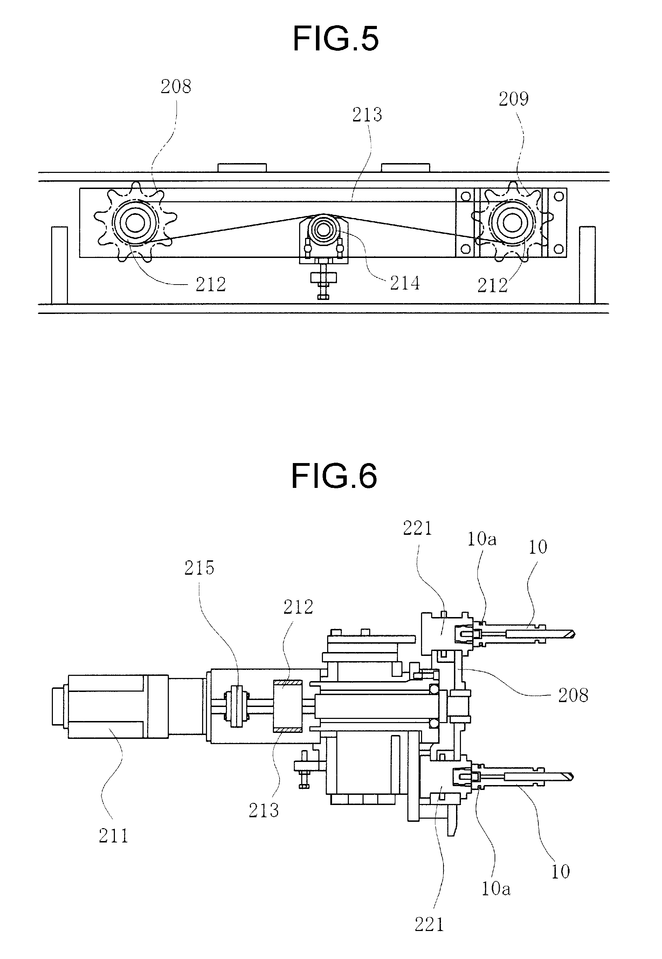

FIG. 5 and FIG. 6 show the drive structure of the sprockets 208, 209 as drive components, in which FIG. 5 shows a front view and FIG. 6 shows a side view. A drive motor 211 (geared motor) is coupled to one sprocket 208 by a coupler 215, and both sprockets 208, 209 each have a timing pulley 212, connected by a timing belt 213. The tension on the timing belt 213 is adjusted by a tension roller 214. Therefore, both sprockets 208, 209 together become the endless chain 220 drive sprockets. In addition, the positions of the two sprockets 208, 209 are fixed, and the interval between them is held constant. By driving with a plurality of drive components as described above, the endless chain 220 is driven without jerking and is able to circulate smoothly and stably.

When attempting to store as many tools as possible in the tool magazine 200 the length of the endless chain 220 lengthens, which creates slack in the chain. However, even if slack appears in the endless chain 220, the interval between the two sprockets 208, 209 is held constant and the number of tool pockets 221 entering therebetween remains constant as well. Thus, if the endless chain 220 between the two sprockets 208, 209 is supported by a horizontal support plate or the like, not shown, the positions of the tools 10 in the tool pockets 221 can always be held substantially constant. At the same time, the tool change positions of the automatic tool changer 70 and the spindle 30 are always held constant, and therefore tools can always be properly changed.

It should be noted that although in the present invention the two sprockets are driven simultaneously and the chain of the tool magazine circulated, it is of course possible to provide more than two sprockets depending on the length of the chain. Moreover, something other than a sprocket may be used to drive the chain.

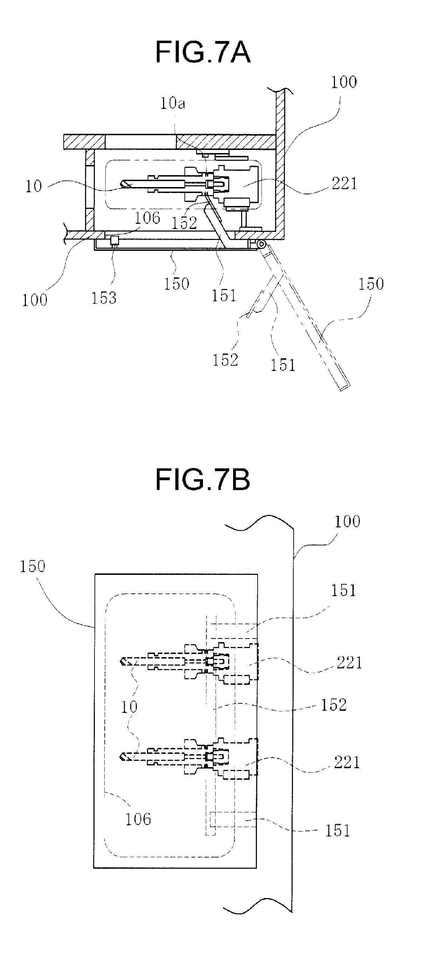

FIGS. 7A and 7B show the structure of a tool mount. In order for the operator to mount the tool 10 in the tool pocket 221 of the tool magazine 200 and to remove the tool 10 from the tool pocket 221, an opening 106 is formed in one lateral side surface of the machine frame 100. A cover 150 made of steel plate and capable of covering the opening is provided over the opening 106. When the cover 150 is opened, the operator can insert his or her hand into the opening and change the tool 10 in the tool pocket 221.

Where the machine frame has no main pillar 101 due to the structure of the jig, a splash guard or other machine cover is provide in place of the main pillar. In this case, the opening is provided on the machine cover.

A bracket 151 is mounted on a rear surface of the cover 150. A thin, plate-like engaging part 152 is mounted on a tip of the bracket 151. At the same time, on the tool 10, as described with reference to FIG. 3, a groove-like engaged part 10a is formed. When the cover 150 is closed, if the tool 10 is properly fitted to a predetermined position of the tool pocket 221, then the tip of the engaging part 152 can engage the engaged part 10a of the tool 10, and the cover 150 can be completely closed. That the cover 150 can be completely and properly closed can be confirmed by a sensor 153.

When the plate of the engaging part 152 is long, it can be detected simultaneously whether a plurality of tools 10 has been mounted properly in the tool pockets 221, and it can be confirmed when the tools in the plurality of tool pocket 221 are changed.

In the present invention, the tool magazine may be located not only inside the outer surfaces of the machining center or a hypothetical extended plane thereof but alternatively may employ other arrangements as described below.

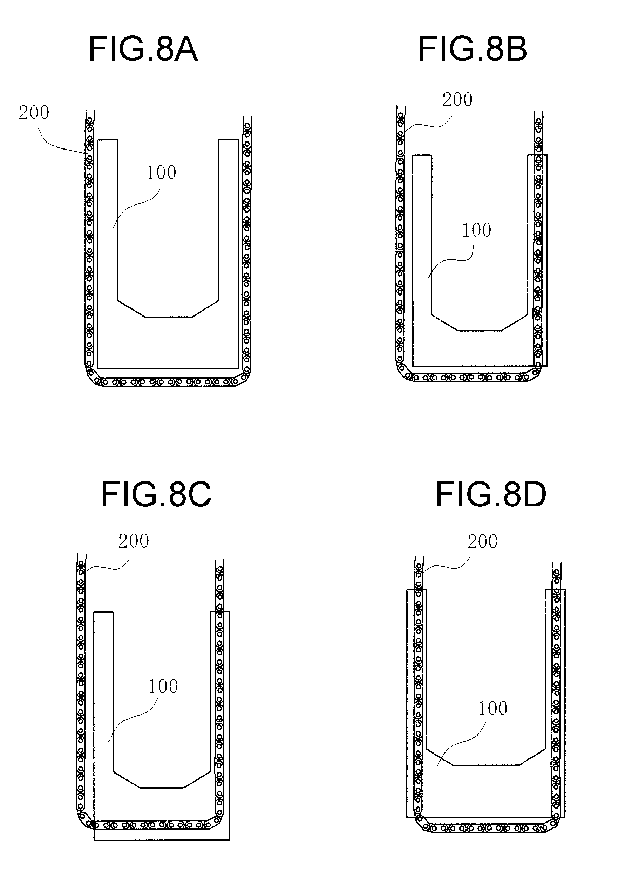

FIGS. 8A-8D shows examples of various layouts of the tool magazine 200 and machine frame 100 or machine cover. The tool magazine 200 is not only positioned adjacent to the inside and outside of the machine frame but also, as already noted, in a machining center which does not need a main pillar that supports a rotary type jig, a portion of the tool magazine is disposed adjacent to the inside or outside of a machine cover such as a splash guard provided around the machining center.

FIGS. 8A-8D show various dispositions of the tool magazine 200 adjacent to the inside and/or the outside of the machine frame 100.

FIG. 8A shows an arrangement in which the entire tool magazine 200 passes through a position adjacent to the outside of the machine frame 100. FIG. 8B shows an arrangement in which one vertical portion of the tool magazine 200 is inside the machine frame 100 and the other vertical portion and a bottom portion are disposed at a position adjacent to the outside of the machine frame 100. FIG. 8C shows an arrangement in which one vertical portion of the tool magazine 200 is disposed outside the machine frame 100 and the other vertical portion and a bottom portion is disposed at a position adjacent to the inside of the machine frame 100. FIG. 8D shows an arrangement in which both vertical portions of the tool magazine 200 are inside the machine frame 100, with the bottom part disposed at a position adjacent to the bottom side of the machine frame 100. As shown in these illustrative examples, in the present invention, the tool magazine 200 or the endless chain 220 is disposed at positions adjacent to the inside or the outside of the machine frame 100, and by maximizing the length of the endless chain 220, the number of tools that can be stored in the tool magazine can be maximized.

Although not shown, in the tool magazine shown in FIGS. 8A, 8B and 8D the bottom side thereof can be disposed up to between the bottom surface of the machine frame 100 and a floor surface on which the machining center M is installed, without contacting the bottom surface of the machine frame 100.

In addition, a tool magazine cover or the like may be provided as a machine cover on the top of the machine frame 100. When using a tool magazine cover or the like, disposing the endless chain at a position adjacent to either the inside or the outside of the cover lengthens the chain, which is desirable.

Thus, as described above, the present invention provides the following several advantages, none of which constitutes a result predictable from the

### background art.

First, the present invention maximizes the number of tools that can be stored in the tool magazine of a processing apparatus such as a machining center while at the same time minimizing the amount of space required for installation of the machining center.

Second, the present invention makes it possible to confirm that the tools have been properly mounted in the tool magazine 200 using a simple structure

Third, where the tool magazine of a processing apparatus such as a machining center is contained within the machine frame or the machine cover, the need for additional safety components such as a safety cover or a protective cover that covers the tool magazine can be kept to a minimum, thus enabling the cost of the machining center M to be held down.

As many apparently widely different embodiments of the present invention can be made without departing from the spirit and scope thereof, it is to be understood that the invention is not limited to the specific embodiments thereof except as defined in the appended claims.

## Claims

1. A machining center comprising:
a tool magazine having an endless chain to hold a plurality of tool pockets;
a spindle to which a tool that performs a machining operation on a workpiece may be detachably attached; and
an automatic tool changer to change the tool, disposed between the plurality of tool pockets and the spindle,
a portion of the tool magazine disposed opposite a machine frame of the machining center or a machine cover of the machining center being disposed adjacent to a side surface and a bottom surface of the machine frame or the machine cover.

2. The machining center according to claim 1, wherein at least a portion of the tool magazine is disposed adjacent to an outer side of the side surface and a bottom side of the bottom surface of the machine frame or the machine cover.

3. A machining center according to claim 1, wherein the portion of the tool magazine disposed opposite the machine frame of the machining center or the machine cover of the machining center that is disposed adjacent to the side surface of the machine frame or the machine cover is further disposed on a bottom side of the bottom surface so as to extend to a floor surface on which the machining center is installed.

4. A machining center comprising:
a tool magazine having an endless chain to hold a plurality of tool pockets;
a spindle to which a tool that performs a machining operation on a workpiece may be detachably attached; and
an automatic tool changer to change the tool, disposed between the plurality of tool pockets and the spindle,
the tool magazine being disposed inside of an outer side surface of the machining center or an extension surface thereof at a side portion of the machining center.

5. The machining center according to claim 1, wherein the endless chain of the tool magazine is disposed adjacent to at least one of an inner wall surface and an outer wall surface of the machine frame or the machine cover over at least half of a length of the endless chain.

6. The machining center according to claim 1, further comprising at least two drive components that drive the endless chain in a circulating manner.

7. The machining center according to claim 6, wherein the drive components comprise two sprockets spaced a constant distance apart,
the automatic tool changer changing the tool at a position between the two sprockets.

8. A machining center comprising:
a tool magazine having an endless chain to hold a plurality of tool pockets;
a spindle to which a tool that performs a machining operation on a workpiece may be detachably attached;
an automatic tool changer to change the tool, disposed between the plurality of tool pockets and the spindle;
a machine frame on which the tool magazine is mounted, a lateral side surface of the machine frame or of a machine cover of the machining center having an opening for mounting a tool in the tool pocket, a cover mounted on the frame so as to cover the opening when closed and enable access to the opening when open;
an engaging part mounted on the cover that engages an engaged part formed on a tool mounted in a tool pocket when the cover is closed; and
a sensor to detect closing of the cover of the opening in the lateral side surface of the machine frame or of the machine cover,
the sensor detecting closing of the cover by detecting engagement of the engaging part on the cover with the engaged part on the tool.
